**Europäisches Patentamt**

**European Patent Office**

**Office européen des brevets**

(11) Numéro de publication: **0 244 307**
**B1**

(12) **FASCICULE DE BREVET EUROPEEN**

(45) Date de publication du fascicule du brevet: **08.08.90**

(51) Int. Cl.⁵: **H 02 K 49/04**

(21) Numéro de dépôt: **87400940.0**

(22) Date de dépôt: **23.04.87**

(54) Perfectionnements apportés aux rotors induits des ralentisseurs électromagnétiques.

(30) Priorité: **30.04.86 FR 8606280**

(43) Date de publication de la demande:
**04.11.87 Bulletin 87/45**

(45) Mention de la délivrance du brevet:
**08.08.90 Bulletin 90/32**

(84) Etats contractants désignés:
**AT BE CH DE ES GB IT LI NL SE**

(56) Documents cités:
**FR-A-2 275 927**
**GB-A- 754 399**
**US-A-2 733 361**

(73) Titulaire: **LABAVIA S.G.E.**
**5, avenue Newton Parc d'Activités**
**F-78180 Montigny le Bretonneux (FR)**

(72) Inventeur: **Estaque, Michel**
**76 Rue des Lilas**
**F-95150 Taverny (FR)**

(74) Mandataire: **Behaghel, Pierre et al**
**CABINET PLASSERAUD 84 rue d'Amsterdam**
**F-75009 Paris (FR)**

Courier Press, Leamington Spa, England.

## Description

L'invention est relative aux rotors induits des ralentisseurs électromagnétiques, notamment pour véhicules, rotors comprenant au moins un disque en matière ferromagnétique solidarisable avec l'arbre à ralentir et propre à défiler en regard d'une couronne statorique de pôles électromagnétiques alternativement positifs et négatifs dont il n'est séparé que par un entrefer, ce disque étant alors freiné et échauffé du fait de la création de courants de Foucault dans sa masse.

Elle vise plus particulièrement, parmi ces rotors, ceux dont le disque est relié à une bague de fixation intérieure par une couronne de bras formant ailettes de ventilation, les portions de plus grand diamètre de ces bras faisant saillie axialement sur la face du disque opposée à l'entrefer, et les crêtes de ces portions étant réunies entre elles par une joue annulaire, l'ensemble du disque, de la bague, des bras et de la joue étant constitué par un seul bloc moulé, de préférence en acier.

Le document US—A—2733361 décrit un rotor du genre mentionné ci-dessus, comportant deux disques reliés entre-eux, par des boulons traversant des pattes de fixation venues de matière du disque et régulièrement séparties les unes en face des autres à la périphérie de chacun des disques.

L'évacuation des calories engendrées dans le disque d'un tel rotor par les courants de Foucault, lors de la mise en service du ralentisseur équipé de de rotor, se fait essentiellement par conduction vers la joue à travers les bras et par rayonnement et convection à partir du disque, des bras et de la joue, ce dernier phénomène étant fortement renforcé par ventilation: en effet le rotor joue alors un rôle de ventilateur en balayant par un courant d'air de refroidissement les surfaces chaudes à refroidir du disque, des bras et de la joue, surfaces qui délimitent alors des canaux pour ledit courant d'air.

Dans les modes de réalisation connus des rotors du genre ci-dessus, la structure annulaire de ventilation constituée par les bras et la joue présente un diamètre extérieur au plus égal à celui du disque sur lequel elle est rapportée.

Quant au disque lui-même, il est constitué par une rondelle relativement épaisse présentant une épaisseur constante ou pratiquement constante sur toute son étendue et le diamètre extérieur de cette rondelle est généralement égal à celui de la couronne de pôles statoriques en regard de laquelle elle défile.

Il peut en effet sembler peu judicieux de prolonger radialement ce disque vers l'extérieur au-delà de cette couronne de pôles, la portion annulaire du disque qui déborde radialement au-delà de l'entrefer étant alors mal exploitée magnétiquement.

De ce qui précède il résulte que, dans les modes de réalisation connus, le diamètre extérieur de la structure de ventilation est relativement petit.

L'invention a pour but d'améliorer le refroidissement des disques des rotors du genre en question au cours de leur fonctionnement, ce qui accroît la valeur de couple à chaud engendré par les ralentisseurs correspondants.

A cet effet les rotors du genre en question selon l'invention sont essentiellement caractérisés en ce que le diamètre extérieur de leur structure de ventilation constituée par les bras et la joue est plus grand que le diamètre extérieur du disque, diamètre considéré au niveau du plan moyen de ce disque.

Dans des modes de réalisation préférés, on a recours en outre à l'une et/ou à l'autre des dispositions suivantes:

—la portion, du disque, située axialement du côté où se trouve la structure de ventilation, est prolongée radialement par une collerette débordante plus mince que le disque,

—la portion, du disque, située axialement du côté où se trouve l'entrefer, est prolongée radialement par une collerette débordante plus mince que le disque,

—dans un rotor selon l'un des deux alinéas précédents, chaque collerette débordante est amincie vers sa périphérie,

—la différence entre le diamètre extérieur maximum de la structure de ventilation et le diamètre extérieur du disque au niveau de son plan moyen est comprise entre 2 et 5% dudit diamètre maximum.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en demi-coupe axiale un rotor de ralentisseur électromagnétique établi conformément à l'invention, le stator correspondant étant en outre représenté partiellement en spectre.

La figure 2 montre en demi-coupe axiale partielle une variante d'un tel ensemble rotor-stator, à une échelle agrandie.

La figure 3 est une vue en bout partielle d'un ensemble rotor-stator du genre ci-dessus, présentée dans un but explicatif.

Le mot "rotor" utilisé dans le présent texte désigne plus précisément chacun des sous-ensembles monoblocs 1 qui sont compris par l'ensemble rotorique d'axe X d'un ralentisseur électromagnétique ou à "courants de Foucalt" et qui comportent un disque induit 2 constitué par une rondelle relativement épaisse et plate en matériau ferromagnétique.

Comme on le sait, un tel disque 2 est solidarisé avec l'arbre 3 à ralentir, tel que l'arbre de transmission d'un véhicule, et il est monté de façon à pouvoir défiler devant le stator 4 du ralentisseur, ou plus précisément devant une couronne de pôles inducteurs 5 alternativement positifs et négatifs faisant partie de ce stator, avec interposition d'un entrefer E, le disque 2 en question étant alors le siège de courants de Foucault qui se traduisent par un freinage et un échauffement de ce disque.

L'ensemble rotorique du ralentisseur comprend, en plus du rotor ou sous-ensemble défini ci-dessus, lequel est unique ou de préférence dédoublé symétriquement de part et d'autre du stator, une pièce intermédiaire 6 de révolution autour de l'axe X, telle qu'un manchon, moyeu ou plateau, elle-même fixée, généralement par boulonnage, sur l'arbre 3 à ralentir, chaque "rotor" 1 ici considéré étant de son côté fixé par boulonnage sur cette pièce intermédiaire.

D'une façon encore connue en soi, chaque rotor 1 comprend, en plus du disque 2, et venues de moulage avec ce disque:

—une bague de fixation 7 de diamètre moyen inférieur au diamètre intérieur du disque 2, percée d'alésages axiaux 8, filetés ou non, destinés à recevoir des boulons (non représentés) de fixation de cette bague sur la pièce intermédiaire 6,

—une couronne de bras 9 formant ailettes de ventilation et faisant saillie sur la face, du disque 2, opposée à sa face destinée à délimiter l'entrefer E, ces bras étant prolongés vers l'axe X de façon à relier le disque à la bague 7,

—et une jante ou joue annulaire 10 s'étendant en général parallèlement au disque et reliant les crêtes des portions de plus grand diamètre des bras 9 de façon à former entre ces portions, le disque et la joue des canaux de guidage 11 pour l'air de ventilation.

Vus en coupe transversale, les bras 9 sont inclinés et de préférence incurvés vers l'arrière par rapport au sens de rotation du rotor, si l'on considère les rayons croissants.

En coupe axiale, ces bras 9 pourraient être "droits", leurs lignes moyennes demeurant alors sensiblement contenues dans un même plan transversal.

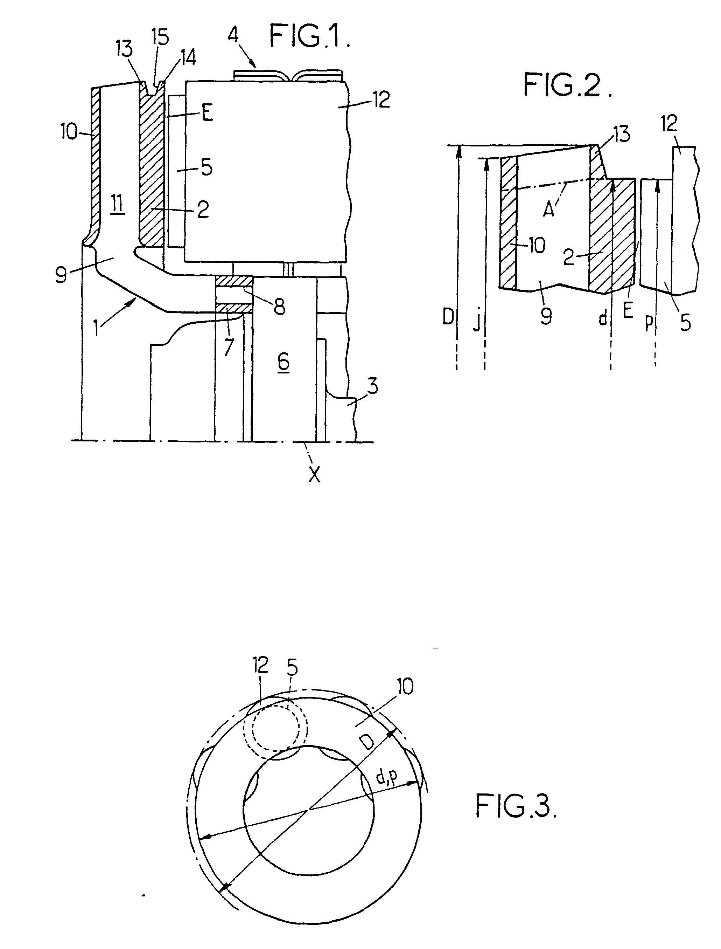

Mais ces bras 9 sont de préférence axialement coudés, comme dans le mode de réalisation illustré sur la figure 1, de façon à "rentrer" axialement la bague 7 vers l'intérieur du stator et à réduire ainsi l'encombrement axial de la portion centrale du rotor.

Les bras 9 sont avantageusement complétés par des ailettes complémentaires (non représentées) interposées circonférentiellement entre ces bras et axialement entre le disque et la joue, la forme de chaque ailette étant pratiquement identique à celle de la portion, de chaque bras, interposée entre le disque et la joue.

Ces ailettes sont venues de moulage avec le reste du rotor et sont avantageusement au nombre de huit ou de seize dans le cas préféré où le nombre des bras est égal à huit.

Dans les réalisations connues, le diamètre maximum D (figure 2) de la structure de ventilation constituée par les bras, les ailettes, la joue et éventuellement les portions, du disque, adjacentes aux bras et aux ailettes, est au maximum égal au diamètre extérieur $d$ du disque, diamètre considéré au niveau du plan moyen de ce disque, c'est-à-dire au niveau du milieu de son épaisseur axiale.

En d'autres termes, dans ces réalisations connues, le plus grand diamètre du rotor est ce diamètre $d$ et c'est le disque lui-même qui détermine l'encombrement transversal du rotor.

De plus, dans lesdites réalisations, le diamètre $d$ en question est en général égal au diamètre $p$ de la couronne de pôles statoriques 5.

Il peut en effet sembler inopportun de donner à ce diamètre $d$ une valeur supérieure à $p$ du fait que la seule portion du disque qui est correctement exploitée magnétiquement est celle qui est située axialement en regard de l'entrefer E.

Pour ces différentes raisons, le diamètre $d$ était jusqu'à ce jour relativement petit et généralement limité à celui de la couronne de pôles $p$, comme visible sur la figure 3.

Or la demanderesse a constaté que l'encombrement transversal du ralentisseur était déterminé non pas par le disque lui-même, mais par les bobines 12 de fil électrique qui entourent des noyaux de matériau ferromagnétique et constituent avec ces noyaux les pôles 5, et qu'il était donc possible d'augmenter légèrement le diamètre D de la structure de ventilation sans pour autant augmenter le diamètre $d$ tel que défini ci-dessus du disque.

Cette augmentation du diamètre D sans augmentation du diamètre $d$ présente les avantages suivants:

—elle n'augmente pas l'encombrement transversal hors tout du ralentisseur,

—elle n'augmente que très peu le poids du rotor, vu que l'augmentation de diamètre concerne uniquement des portions périphériques continues minces de ce rotor ou des portions périphériques discontinues dudit rotor et non pas la seule portion continue épaisse de ce rotor, savoir le disque,

—enfin, et surtout, elle permet d'améliorer nettement la ventilation et donc l'évacuation des calories engendrées dans le disque par la création des courants de Foucault, du fait que la couronne de ventilation périphérique ainsi ajoutée au rotor concerne les plus grands diamètres, et donc la plus grande étendue périphérique du rotor.

En définitive, la disposition ci-dessus décrite permet d'améliorer le rendement du ralentisseur à chaud, toutes choses égales par ailleurs.

Comme visible sur les figures 1 et 2, la portion additionnelle de la structure de ventilation peut comporter une collerette mince 13 prolongeant radialement vers l'extérieur la portion, du disque 2, qui se trouve axialement du côté de cette structure de ventilation.

En outre, comme visible sur la figure 1 qui concerne un mode de réalisation préféré, on peut faire comprendre au rotor une seconde collerette 14 prolongeant radialement vers l'extérieur la portion, du disque 2, qui se trouve axialement du côté de l'entrefer E.

La périphérie de ce disque 2 est alors délimitée par une gorge 15 radialement ouverte vers l'extérieur.

L'une et/ou l'autre des collerettes 13 et 14 est de préférence amincie vers sa périphérie: sa demi-section axiale est alors avantageusement celle d'un trapèze rectangulaire.

Comme dans les réalisations antérieures, on donne avantageusement à la périphérie de l'enveloppe fictive de la structure de ventilation une forme tronconique convergeant vers l'extérieur du ralentisseur: en d'autres termes, le diamètre extérieur *j* de la joue 10 est plus petit que le diamètre maximum D de la structure, lequel diamètre est alors celui de la collerette 13.

A titre de comparaison, on a représenté en traits mixtes en A sur la figure 2 le profil tronconique de l'enveloppe fictive de la structure de ventilation comprise par un rotor antérieurement connu.

A titre illustratif, et bien entendu non limitatif de l'invention, on indique que, dans un mode de réalisation de celle-ci ayant donné toute satisfaction et pour lequel le diamètre D était de l'ordre de 500 à 550 mm, la différence D−d était de l'ordre de 15 à 20 mm.

Plus généralement le rapport entre les cotes D−d et D est de préférence compris entre 2 et 5%.

En suite de quoi, et quel que soit le mode de réalisation adopté, on dispose finalement d'un rotor de ralentisseur électromagnétique dont la constitution et les avantages résultent suffisamment de ce qui précède.

## Revendications

1. Rotor induit de ralentisseur électromagnétique, comprenant au moins un disque (2) en matière ferromagnétique relié à une bague de fixation intérieure (7) par une couronne de bras (9) formant ailettes de ventilation, les portions de plus grand diamètre de ces bras faisant saillie axialement sur la face, du disque, opposée à l'entrefer (E), et les crêtes de ces portions étant réunies entre elles par une joue annulaire (10), l'ensemble du disque, de la bague, des bras et de la joue étant constitué par un seul bloc moulé, caractérisé en ce que le diamètre extérieur maximum (D) de la structure de ventilation constituée par les bras et par la joue est plus grand que le diamètre extérieur (d) du disque, considéré au niveau du plan moyen de ce disque.

2. Rotor selon la revendication 1, caractérisé en ce que la portion, du disque (2), située axialement du coté où se trouve la structure de ventilation, est prolongée radialement par une collerette débordante (13) plus mince que le disque.

3. Rotor selon l'une quelconque des précédentes revendications, caractérisé en ce que la portion, du disque (2), située axialement du côté où se trouve l'entrefer (E), est prolongée radialement par une collerette débordante (14) plus mince que le disque.

4. Rotor selon l'une quelconque des revendications 2 et 3, caractérisé en ce que la collerette débordante (13 ou 14) est amincie vers sa périphérie.

5. Rotor selon la revendication 4, caractérisé en ce que la demi-section axiale de la collerette débordante (13 ou 14) présente la forme d'un trapèze rectangulaire.

6. Rotor selon l'une quelconque des précédentes revendications, caractérisé en ce que la différence entre le diamètre extérieur maximum (D) de la structure de ventilation et le diamètre extérieur (d) du disque (2) au niveau de son plan moyen est comprise entre 2 et 5% dudit diamètre maximum (D).

## Patentansprüche

1. Induzierter Rotor einer elektromagnetischen Bremse, mit zumindest einer Scheibe (2) aus ferromagnetischem Material, die mit einem inneren Befestigungsring (7) über einen Kranz von Armen (9) verbunden ist, welche Ventilationsflügel bilden, wobei die Abschnitte größeren Durchmessers dieser Arme axial von der dem Luftspalt (E) gegenüberliegenden Seite der Scheibe abstehen und die Scheitel dieser Abschnitte untereinander durch einen Ringflansch (10) verbunden sind, wobei die Anordnung aus Scheibe, Ring, Armen und Flansch aus einem einzigen Gußkörper gebildet ist, dadurch gekennzeichnet, daß der größte Außendurchmesser (D) der durch die Arme und den Flansch gebildeten Ventilationseinrichtung auf der Höhe der Mittelebene der Scheibe größer als der Außendurchmesser (d) der Scheibe ist.

2. Rotor nach Anspruch 1, dadurch gekennzeichnet, daß jener Abschnitt der Scheibe (2), der axial auf der Seite der Ventilationseinrichtung angeordnet ist, in radialer Richtung durch einen überstehenden Randabschnitt (13) verlängert ist, der dünner als die Scheibe ist.

3. Rotor nach einem der vorhergehenden Ansprüche, dadurch gekennzeichnet, daß jener Abschnitt der Scheibe (2), der axial auf der Seite des Luftspaltes (E) angeordnet ist, radial durch einen überstehenden Randabschnitt (14) verlängert ist, der dünner als die Scheibe ist.

4. Rotor nach Anspruch 2 oder 3, dadurch gekennzeichnet, daß der überstehende Randabschnitt (13 bzw. 14) gegen seinen Umfang verjüngt ausgebildet ist.

5. Rotor nach Anspruch 4, dadurch gekennzeichnet, daß der axiale Halbschnitt des überstehenden Randabschnittes (13 bzw. 14) die Form eines rechteckigen Trapezes hat.

6. Rotor nach einem der vorhergehenden Ansprüche, dadurch gekennzeichnet, daß die Differenz zwischen dem größten Außendurchmesser (D) der Ventilationseinrichtung und dem Außendurchmesser (d) der Scheibe (2) auf der Höhe ihrer Mittelebene zwischen 2 und 5% des größten Durchmessers (D) beträgt.

## Claims

1. Armature rotor for an electromagnetic retarder, including at least one disk (2) made from a ferromagnetic material connected to an inner fixing ring (7) by an annulus of arms (9) forming ventilation fins, the largest diameter portions of these arms projecting axially from the face of the disk opposite the air gap (E), and the crests of these portions being joined together by an annular web (10), the assembly formed by the disk, the ring, the arms and the web being formed of a single molded block, characterized in that the maximum outer diameter (D) of the ventilation structure formed by the arms and the web is greater than the outer diameter (d) of the disk, considered at the level of the mean plane of this disk.

2. Rotor according to claim 1, characterized in that the portion of the disk (2) situated axially on the side where the ventilation structure is located, is extended radially by a projecting collar (13) thinner than the disk.

3. Rotor according to any one of the preceding claims, characterized in that the portion of the disk (2) situated axially on the side where the air gap (E) is situated is extended radially by a projecting collar (14) thinner than the disk.

4. Rotor according to any one of the claims 2 and 3, characterized in that the projecting collar (13 or 14) is tapered down towards its periphery.

5. Rotor according to claim 4, characterized in that the axial half section of the projecting collar (13 or 14) has the form of a right angled trapezium.

6. Rotor according to any one of the preceding claims, characterized in that the difference between the outer maximum diameter (D) of the ventilation structure and the outer diameter (d) of the disk (2) at the level of its mean plane is between 2 and 5% of said maximum diameter (D).

FIG.1.

FIG.2.

FIG.3.